# EUROPEAN PATENT APPLICATION

(11) **EP 4 678 436 A1**
(43) Date of publication of application: **14.01.2026**
(21) Application number: 25188160.3
(22) Date of filing: 08.07.2025
(51) Int. Cl.: B60K 1/00, B60H 1/00, B60K 11/02, B60R 5/00, B60R 5/02, B60K 1/04

(54) **ELECTRIC VEHICLE**

(30) Priority: 11.07.2024 JP 2024111717
(71) Applicant: TOYOTA JIDOSHA KABUSHIKI KAISHA, Toyota-shi, Aichi-ken 471-8571 (JP)
(72) Inventor: TAKEUCHI, Naoki, Toyota-shi, 471-8571 (JP)
(74) Representative: D Young & Co LLP

(57) **Abstract**

An electric vehicle includes a motor configured to drive a front wheel using power of a battery, a power controller configured to supply power from the battery to the motor, an integrated electromechanical unit integrating the motor and the power controller, a thermal integration unit in which multiple components are connected and integrated with each other by to a pipe through which a heat transfer medium flows, and a trunk box. The battery is arranged under a floor of a passenger compartment. The motor, the power controller, the thermal integration unit, and the trunk box are arranged forward of the passenger compartment. The trunk box, the thermal integration unit, and the motor are arranged sequentially from front of a vehicle. The thermal integration unit is arranged between the trunk box and the motor.

## Description

### BACKGROUND

### 1. Field

The present disclosure relates to an electric vehicle.

### 2. Description of Related Art

Japanese Laid-Open Patent Publication No. 2005-029057 discloses a vehicle including a passenger compartment accommodating a driver, an engine compartment arranged forward of the passenger compartment in a vehicle longitudinal direction, and a trunk box arranged in the engine compartment to store a cargo.

Various devices including a driving device may be installed in a compartment (e.g., engine compartment) located forward of a passenger compartment. A trunk box may be arranged in the compartment. In such a structure, heat may be transferred from a heat source installed in the compartment to the trunk box. The heat may be transferred even to a cargo stored in the trunk box. In an electric vehicle, which does not include an engine, a motor can be a heat source, and heat emitted from the motor may be transferred to the trunk box.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In an aspect of the present disclosure, an electric vehicle includes a battery, a front wheel, a motor configured to drive the front wheel using power stored in the battery, a power controller configured to supply power from the battery to the motor, an integrated electromechanical unit in which the motor and the power controller are integrated, a thermal integration unit in which multiple components are connected and integrated with each other by a pipe through which a heat transfer medium flows, and a trunk box configured to store a cargo. The battery is arranged under a floor of a passenger compartment. The motor, the power controller, the thermal integration unit, and the trunk box are arranged forward of the passenger compartment. The trunk box, the thermal integration unit, and the motor are arranged sequentially from front of the vehicle. The thermal integration unit is arranged between the trunk box and the motor.

Other features and aspects will be apparent from the following detailed description, the drawings, and the claims.

### BRIEF DESCRIPTION OF THE DRAWINGS

Fig. 1 is a cross-sectional view showing an embodiment of an electric vehicle as viewed from the left.
Fig. 2 is a schematic diagram showing a configuration of a motor, a planetary gear reduction mechanism, and a differential device in an integrated electromechanical unit in the embodiment shown in Fig. 1.
Fig. 3 is a diagram showing a thermal management system in the embodiment shown in Fig. 1.
Fig. 4 is a cross-sectional view showing a thermal integration unit of the embodiment shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

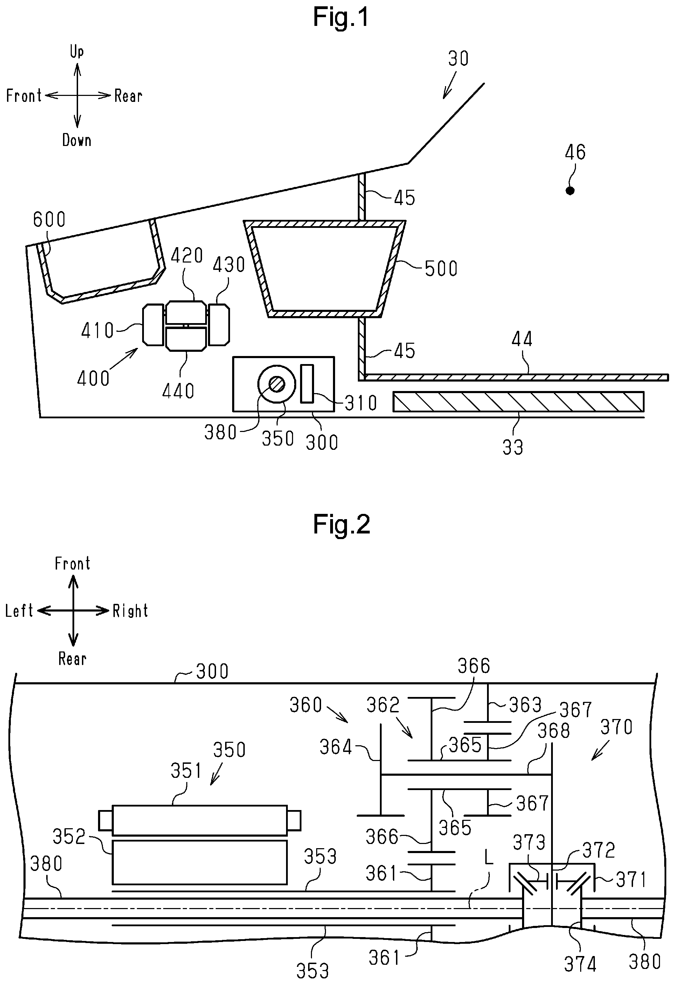

An embodiment of an electric vehicle 30 will now be described with reference to Figs. 1 to 4. In the following description, the terms "front," "rear," "left," "right," "up," and "down" refer to directions as viewed from the perspective of an occupant facing forward of the vehicle. The left-right direction corresponds to a vehicle lateral direction.

### Internal Structure of Electric Vehicle 30

Fig. 1 is a schematic diagram of the internal structure of the electric vehicle 30 as viewed from the left. As shown in Fig. 1, the electric vehicle 30 includes a battery 33 and a dashboard panel 45. The dashboard panel 45 separates the internal space of the electric vehicle 30 into a passenger compartment 46 and a part located forward of the passenger compartment 46. The passenger compartment 46 is a space located rearward of the dashboard panel 45. In the electric vehicle 30, the battery 33 is arranged under a floor 44 in the passenger compartment 46.

The electric vehicle 30 includes an integrated electromechanical unit 300 and a thermal integration unit 400 arranged forward of the dashboard panel 45. The integrated electromechanical unit 300 includes a motor 350, a power transmission mechanism (not shown), and a power controller 310. The power controller 310 is arranged rearward of the motor 350. That is, the power controller 310 and the motor 350 are arranged next to each other in the front-rear direction.

The electric vehicle 30 includes a heating ventilating and air conditioning 500 (HVAC). The HVAC 500 is arranged to extend forward from the passenger compartment 46 through the dashboard panel 45. The HVAC 500 includes a cooling circuit and a heating circuit. The HVAC 500 adjusts the temperature of air using the cooling circuit and the heating circuit and sends the air to the passenger compartment 46.

The thermal integration unit 400 is arranged above the integrated electromechanical unit 300. Therefore, the thermal integration unit 400 is arranged above the motor 350. The thermal integration unit 400 is arranged forward of the HVAC 500.

The electric vehicle 30 includes a trunk box 600 arranged forward of the passenger compartment 46 to store a cargo. The trunk box 600, the thermal integration unit 400, and the motor 350 are arranged sequentially from front of the vehicle. The thermal integration unit 400 is arranged between the trunk box 600 and the motor 350.

### Configuration of the Integrated Electromechanical Unit 300

The motor 350 is included in the integrated electromechanical unit 300 and is a power source that drives front wheels as drive wheels via a drive shaft 380. The battery 33 stores power supplied to the motor 350. More specifically, the electric vehicle 30 drives the front wheels as the drive wheels using power stored in the battery 33.

The power controller 310 included in the integrated electromechanical unit 300 is a device that supplies power to the motor 350. The power controller 310 includes an inverter that converts DC power from the battery 33 into AC power and supplies the AC power to the motor 350.

The integrated electromechanical unit 300 may include a device other than an inverter as the power controller 310. The integrated electromechanical unit 300 may include, in addition to the inverter, a DC-DC converter that boosts the DC power supplied from the battery 33. In this case, the inverter provided as the power controller 310 converts the DC power supplied from the DC-DC converter into AC power and supplies the AC power to the motor 350. The integrated electromechanical unit 300 may include, as the power controller 310, an electronic control unit (ECU) that controls power supplied to the motor 350. The ECU includes a CPU and memory that stores control programs and data. The ECU executes various control processes when the CPU executes the programs stored in the memory.

Fig. 2 is a schematic diagram showing the integrated electromechanical unit 300. As shown in Fig. 2, the integrated electromechanical unit 300 accommodates a motor 350, a planetary gear reduction mechanism 360, and a differential device 370. In the integrated electromechanical unit 300, the motor 350, the planetary gear reduction mechanism 360, and the differential device 370 are arranged so as to overlap with each other as viewed from a side of the vehicle. The planetary gear reduction mechanism 360 decelerates rotation transmitted from the motor 350 and outputs the rotation. The differential device 370 transmits rotation transmitted from the planetary gear reduction mechanism 360 to the drive wheels via right and left drive shafts 380. Thus, the planetary gear reduction mechanism 360, the differential device 370, and the drive shaft 380 form a power transmission mechanism.

The integrated electromechanical unit 300 includes the planetary gear reduction mechanism 360 arranged at the right side of the motor 350. The integrated electromechanical unit 300 includes the differential device 370 arranged at the right side of the planetary gear reduction mechanism 360. The integrated electromechanical unit 300 may include the planetary gear reduction mechanism 360 arranged at the left side of the motor 350. In this case, the integrated electromechanical unit 300 includes the differential device 370 arranged at the left side of the planetary gear reduction mechanism 360.

### Configuration of the Motor 350

The motor 350 includes a stator 351, a rotor 352, and an output shaft 353. The stator 351 is fixed to a case of the integrated electromechanical unit 300. The rotor 352 is rotatable relative to the stator 351. The output shaft 353 is fixed to the rotor 352.

### Configuration of the Planetary Gear Reduction Mechanism 360

The planetary gear reduction mechanism 360 includes a sun gear 361, pinion gears 362, a ring gear 363, and a carrier 364. The sun gear 361 is fixed to the output shaft 353, which protrudes rightward from the motor 350. The sun gear 361 has an annular shape with external teeth. The sun gear 361 rotates integrally with the output shaft 353 about a rotation axis L.

The ring gear 363 is fixed to the case of the integrated electromechanical unit 300. The ring gear 363 has an annular shape with internal teeth. The ring gear 363 is located at the right side of the sun gear 361.

Each pinion gear 362 includes a pinion shaft 365, a large-diameter pinion gear 366, and a small-diameter pinion gear 367. The pinion gear 362 is thus commonly known as a stepped pinion. The large-diameter pinion gear 366 is an external gear fixed to the pinion shaft 365. The large-diameter pinion gear 366 meshes with the sun gear 361. The small-diameter pinion gear 367 is an external gear fixed to a portion of the outer circumferential surface of the pinion shaft 365 to the right of the large-diameter pinion gear 366. The outer diameter of the small-diameter pinion gear 367 is smaller than the outer diameter of the large-diameter pinion gear 366. The small-diameter pinion gear 367 meshes with the ring gear 363. The planetary gear reduction mechanism 360 includes three pinion gears 362. In Fig. 2, only one representative pinion gear 362 is illustrated.

The pinion shafts 365 of the pinion gears 362 are rotatably supported by the carrier 364. Specifically, support shafts 368 of the carrier 364 extend through the centers of the respective pinion shafts 365. The pinion shafts 365 are supported by the support shafts 368. The carrier 364 has the shape of a disc. The pinion gears 362 are rotatable relative to the carrier 364. In other words, each pinion gear 362 is rotatable.

The integrated electromechanical unit 300 rotatably supports the carrier 364. In other words, the carrier 364 is rotatable relative to the case of the integrated electromechanical unit 300. The pinion gears 362 are capable of orbiting around the sun gear 361. The carrier 364 is capable of rotating coaxially with the sun gear 361 in accordance with the orbital movement of the pinion gears 362. That is, the carrier 364 rotates about the rotation axis L.

### Configuration of the Differential Device 370

The differential device 370 includes a differential case 371, a differential pinion shaft 372, two differential pinion gears 373, and two differential side gears 374. The differential case 371 is integrated with the carrier 364. The differential pinion shaft 372 is provided inside the differential case 371. The differential pinion shaft 372 is orthogonal to the rotation axis L. The differential pinion shaft 372 extends through the differential pinion gears 373. The differential pinion gears 373 respectively mesh with the differential side gears 374. The right differential side gear 374 is connected to the right drive shaft 380. The left differential side gear 374 is connected to the left drive shaft 380.

When the carrier 364 rotates about the rotation axis L, the differential case 371 rotates about the rotation axis L. The rotation of the differential case 371 about the rotation axis L is transmitted to the right and left drive shafts 380 via the differential pinion shaft 372, the differential pinion gears 373, and the differential side gears 374, so that the right and left drive shafts 380 rotate about the rotation axis L. The above-described gears allow the differential device 370 to generate a difference between the rotation speeds of the right and left drive shafts 380. The left drive shaft 380 extends through the output shaft 353. The drive shafts 380 are rotatable relative to the output shaft 353.

In the integrated electromechanical unit 300, the drive shaft 380 does not necessarily have to extend through the output shaft 353 of the motor 350. In the integrated electromechanical unit 300, the motor 350, the planetary gear reduction mechanism 360, and the differential device 370 may be arranged so as not to overlap with each other as viewed from a side of the vehicle.

### Configuration of the Thermal Integration Unit 400

As shown in Fig. 1, in the thermal integration unit 400, a thermal manager 410, a refrigerant module 420, a high voltage heater 430, and a motor-driven compressor 440 are integrated with each other. The thermal manager 410 is arranged forward of the high voltage heater 430. The refrigerant module 420 and the motor-driven compressor 440 are arranged between the thermal manager 410 and the high voltage heater 430. The refrigerant module 420 is arranged above the motor-driven compressor 440.

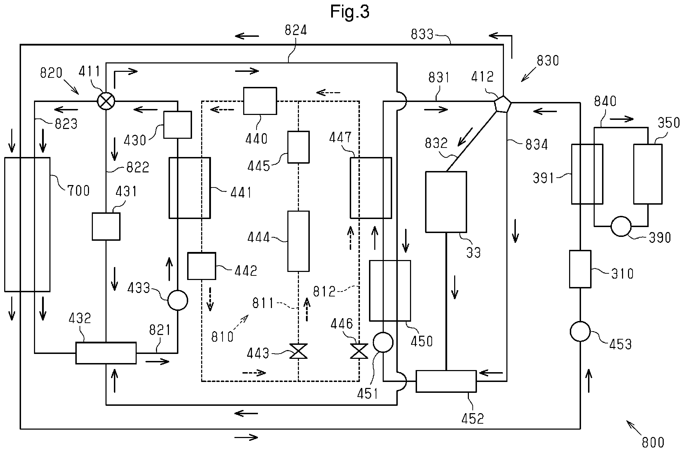

In the thermal manager 410, a four-way valve 411 and a five-way valve 412 are integrated with each other as shown in Fig. 3. The four-way valve 411 is configured to distribute a heat transfer medium flowing through a second pipe 820 (described later) to multiple passages. The five-way valve 412 is configured to distribute a heat transfer medium flowing through a third pipe 830 (described later) to multiple passages. The thermal manager 410 may include an ECU controlling the four-way valve 411 and the five-way valve 412.

The refrigerant module 420 is a device in which a water cooling condenser 441, a first expansion valve 443, a second expansion valve 446, and a chiller 447 are integrated with each other as shown in Fig. 3. The refrigerant module 420 may include an ECU controlling the first expansion valve 443 and the second expansion valve 446.

The high voltage heater 430 is a device that heats the heat transfer medium using power supplied from the battery 33. The motor-driven compressor 440 is a device that compresses the refrigerant using power supplied from the battery 33. The high voltage heater 430 and the motor-driven compressor 440 are each a high voltage auxiliary device into which a high voltage is input. The thermal integration unit 400, in which the high voltage heater 430 and the motor-driven compressor 440 are integrated with each other, is also a high voltage auxiliary device into which a high voltage is input.

The thermal integration unit 400 is a device included in a thermal management system 800 of the electric vehicle 30. The thermal management system 800 efficiently manages the air conditioning of the passenger compartment 46 using the HVAC 500 while maintaining the battery 33 and the integrated electromechanical unit 300 at an appropriate temperature.

### Thermal Management System 800

As shown in Fig. 3, the thermal management system 800 includes a first pipe 810, the second pipe 820, and the third pipe 830. In Fig. 3, the first pipe 810 is indicated by broken lines. The first pipe 810 includes an evaporator passage 811 and a chiller passage 812. The refrigerant flows in the first pipe 810. That is, the first pipe 810 is a refrigerant pipe. The refrigerant flowing in the first pipe 810 is, for example, a hydrofluorocarbon-based (HFC) refrigerant or a hydrofluoroolefin-based (HFO) refrigerant. The second pipe 820 includes the four-way valve 411, a high voltage heater passage 821, a heater core passage 822, a high temperature radiator passage 823, and a heat exchanger passage 824. Cooling water, which is a heat transfer medium, flows to the second pipe 820. The third pipe 830 includes a temperature adjustment passage 831, the five-way valve 412, a battery passage 832, a low temperature radiator passage 833, and a reservoir passage 834. Cooling water, which is a heat transfer medium, flows to the third pipe 830. The heat transfer medium flowing through the second pipe 820 and the third pipe 830 may be an antifreeze. A different type of heat transfer medium may flow to the second pipe 820 and the third pipe 830.

### Arrangement of the Second Pipe 820 and the Third Pipe 830 in the Thermal Manager 410

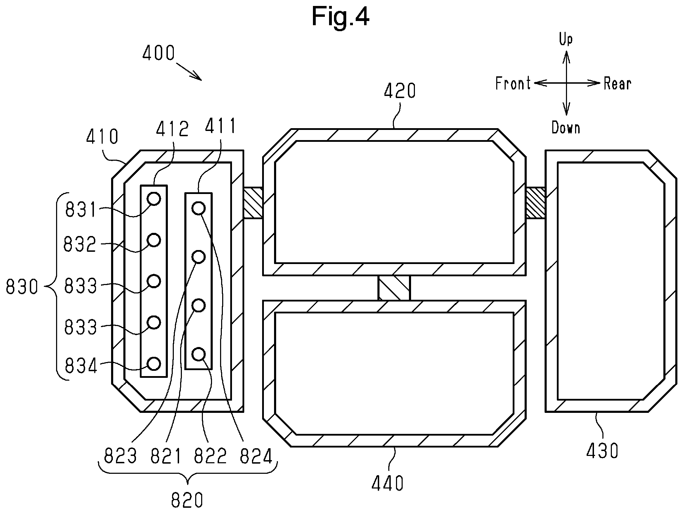

Fig. 4 is a schematic diagram showing the internal structure of the thermal integration unit 400 as viewed from the left side of the electric vehicle 30. As shown in Fig. 4, the four-way valve 411 and the five-way valve 412 are arranged in the thermal manager 410. The four-way valve 411 is connected to the high voltage heater passage 821, the heater core passage 822, the high temperature radiator passage 823, and the heat exchanger passage 824. The high voltage heater passage 821, the heater core passage 822, the high temperature radiator passage 823, and the heat exchanger passage 824 are included in the second pipe 820. That is, part of the second pipe 820 is arranged in the thermal manager 410.

The temperature adjustment passage 831, the battery passage 832, the two low temperature radiator passages 833, and the reservoir passage 834 are connected to the five-way valve 412. One of the two low temperature radiator passages 833 connected to the five-way valve 412 connects the five-way valve 412 to a radiator 700 shown in Fig. 3. The other one of the two low temperature radiator passages 833 connected to the five-way valve 412 connects the five-way valve 412 to an oil cooler 391 shown in Fig. 3. The third pipe 830 includes the temperature adjustment passage 831, the battery passage 832, the two low temperature radiator passages 833, and the reservoir passage 834. That is, part of the third pipe 830 is arranged in the thermal manager 410. In the thermal manager 410 shown in Fig. 4, the third pipe 830 is arranged forward of the second pipe 820. That is, in the present embodiment, the third pipe 830 corresponds to a front pipe. The second pipe 820 corresponds to a rear pipe arranged rearward of the front pipe.

While the high voltage heater 430 is operating, the heat transfer medium flowing in the high voltage heater passage 821 of the second pipe 820 is heated by the high voltage heater 430. Thus, the heat transfer medium flowing in the second pipe 820 has a higher temperature than the heat transfer medium flowing in the third pipe 830.

### Evaporator Passage 811

As shown in Fig. 3, the motor-driven compressor 440, the water cooling condenser 441, a modulator 442, the first expansion valve 443, an evaporator 444, and an evaporator pressure regulator (EPR) 445 are arranged in the evaporator passage 811. The motor-driven compressor 440 compress a refrigerant gas and discharges the compressed refrigerant gas having a high temperature and a high pressure. When the motor-driven compressor 440 is activated, the refrigerant flows in the directions indicated by broken lines with arrows shown in Fig. 3. The compressed refrigerant gas discharged from the motor-driven compressor 440 flows into the water cooling condenser 441.

The water cooling condenser 441 exchanges heat between the compressed refrigerant gas having a high temperature and a high pressure and flowing through the evaporator passage 811 and the heat transfer medium flowing through the high voltage heater passage 821. The compressed refrigerant gas flowing through the evaporator passage 811 has a higher temperature than the heat transfer medium flowing through the high voltage heater passage 821. Thus, the water cooling condenser 441 performs a heat exchange that heats the heat transfer medium flowing through the high voltage heater passage 821 and cools the compressed refrigerant gas flowing through the evaporator passage 811. The compressed refrigerant gas is cooled and condensed in the water cooling condenser 441. As a result, the compressed refrigerant gas becomes a liquid refrigerant. That is, the refrigerant changes from compressed gas to liquid. The liquid refrigerant that has passed through the water cooling condenser 441 flows into the modulator 442. The modulator 442 removes air bubbles from the liquid refrigerant.

The liquid refrigerant that has passed through the modulator 442 flows into the first expansion valve 443. The first expansion valve 443 expands a high-pressure liquid refrigerant to obtain a low-pressure liquid refrigerant. The first expansion valve 443 controls the flow rate of the refrigerant flowing to the evaporator 444. The liquid refrigerant that has passed through the first expansion valve 443 flows into the evaporator 444.

The evaporator 444 exchanges heat between the liquid refrigerant and the air in the HVAC 500. More specifically, the evaporator 444 is the cooling circuit of the HVAC 500. The evaporator 444 absorbs heat from the air in the HVAC 500 to cool the air in the HVAC 500. When receiving heat from the air in the HVAC 500, the liquid refrigerant evaporates and becomes a refrigerant gas. That is, the refrigerant changes from liquid to gas.

The refrigerant gas that has passed through the evaporator 444 flows into an EPR 445. The EPR 445 controls the flow rate of the refrigerant in the evaporator passage 811. Thus, the EPR 445 controls the pressure of the evaporator 444. The refrigerant that has passed through the EPR 445 flows into the motor-driven compressor 440.

### Chiller Passage 812

The chiller passage 812 connects a portion of the evaporator passage 811 downstream of the modulator 442 and a portion of the evaporator passage 811 downstream of the EPR 445 to bypass the evaporator 444 and the EPR 445. The second expansion valve 446 and the chiller 447 are arranged in the chiller passage 812. The second expansion valve 446 expands a high-pressure liquid refrigerant to obtain a low-pressure liquid refrigerant. The second expansion valve 446 controls the flow rate of the refrigerant flowing into the chiller 447. The liquid refrigerant that has passed through the second expansion valve 446 flows into the chiller 447.

The chiller 447 exchanges heat between the liquid refrigerant flowing through the chiller passage 812 and the heat transfer medium flowing through the temperature adjustment passage 831. The liquid refrigerant flowing through the chiller passage 812 has a lower temperature than the heat transfer medium flowing through the temperature adjustment passage 831. Thus, the chiller 447 performs a heat exchange that cools the heat transfer medium flowing through the temperature adjustment passage 831 and heats the liquid refrigerant flowing through the chiller passage 812. The heated liquid refrigerant evaporates into a refrigerant gas. That is, the refrigerant changes from liquid to gas. The refrigerant gas that has passed through the chiller 447 flows into the motor-driven compressor 440.

### High Voltage Heater Passage 821

A reservoir tank 432, the pump 433, the water cooling condenser 441, and the high voltage heater 430 are arranged in the high voltage heater passage 821. The reservoir tank 432 stores the heat transfer medium. The pump 433 discharges the heat transfer medium, which is stored in the reservoir tank 432, toward the water cooling condenser 441. When the pump 433 is activated, the heat transfer medium in the second pipe 820 moves in the directions indicated by arrows shown in Fig. 3. The heat transfer medium discharged from the pump 433 flows into the water cooling condenser 441 arranged downstream of the pump 433.

The water cooling condenser 441 exchanges heat between the heat transfer medium flowing through the high voltage heater passage 821 and the compressed refrigerant gas having a high temperature and a high pressure flowing through the evaporator passage 811. The heat transfer medium flowing through the high voltage heater passage 821 has a lower temperature than the compressed refrigerant gas flowing through the evaporator passage 811. Thus, the water cooling condenser 441 performs a heat exchange that cools the compressed refrigerant gas flowing through the evaporator passage 811 and heats the heat transfer medium flowing through the high voltage heater passage 821.

The heat transfer medium that has passed through the water cooling condenser 441 flows into the high voltage heater 430. The high voltage heater 430 heats the heat transfer medium flowing in the high voltage heater passage 821 using power supplied from the battery 33. The heat transfer medium that has passed through the high voltage heater 430 flows into the four-way valve 411.

The four-way valve 411 is configured to distribute the heat transfer medium flowing from the high voltage heater passage 821 to the heater core passage 822, the high temperature radiator passage 823, and the heat exchanger passage 824. The thermal management system 800 is configured to variably control the proportion of the heat transfer medium distributed to the heater core passage 822, the proportion of the heat transfer medium distributed to the high temperature radiator passage 823, and the proportion of the heat transfer medium distributed to the heat exchanger passage 824 through the four-way valve 411.

### Heater Core Passage 822

A heater core 431 is arranged on the heater core passage 822. The heat transfer medium heated in the high voltage heater passage 821 flows to the heater core passage 822 through the four-way valve 411. Thus, the heat transfer medium flowing to the heater core 431 has a high temperature. The heater core 431 exchanges heat between the heat transfer medium and the air in the HVAC 500. More specifically, the heater core 431 is the heating circuit of the HVAC 500. The heat transfer medium flowing through the heater core 431 heats the air in the HVAC 500. The heat transfer medium flowing through the heater core passage 822 is stored in the reservoir tank 432 through the heater core 431.

### High Temperature Radiator Passage 823

The radiator 700 is arranged on the high temperature radiator passage 823. The radiator 700 exchanges heat between the heat transfer medium flowing through the high temperature radiator passage 823 and the air outside the electric vehicle 30 to cool the heat transfer medium flowing through the high temperature radiator passage 823.

When the heat transfer medium flows to the low temperature radiator passage 833 (described later), the radiator 700 exchanges heat between the heat transfer medium flowing through the high temperature radiator passage 823 and the heat transfer medium flowing through the low temperature radiator passage 833. This heats the heat transfer medium flowing through the low temperature radiator passage 833. The thermal management system 800 controls the five-way valve 412 (described later) to adjust the flow rate of the heat transfer medium flowing through the low temperature radiator passage 833. The heat transfer medium flowing through the high temperature radiator passage 823 is stored in the reservoir tank 432 through the radiator 700.

### Heat Exchanger Passage 824

The heat exchanger 450 is arranged on the heat exchanger passage 824. The heat exchanger 450 exchanges heat between the heat transfer medium flowing through the heat exchanger passage 824 and the heat transfer medium flowing through the temperature adjustment passage 831. The heat transfer medium flowing through the heat exchanger passage 824 has a higher temperature than the heat transfer medium flowing through the temperature adjustment passage 831. Thus, the heat exchanger 450 performs a heat exchange that heats the heat transfer medium flowing through the temperature adjustment passage 831 and cools the heat transfer medium flowing through the heat exchanger passage 824. The heat transfer medium flowing through the heat exchanger passage 824 is stored in the reservoir tank 432 through the heat exchanger 450.

### Temperature Adjustment Passage 831

A reservoir tank 452, a pump 451, the heat exchanger 450, and the chiller 447 are arranged on the temperature adjustment passage 831. The heat transfer medium is stored in the reservoir tank 452. The pump 451 discharges the heat transfer medium stored in the reservoir tank 452 toward the heat exchanger 450. When the pump 451 is activated, the heat transfer medium in the third pipe 830 moves in the directions indicated by arrows shown in Fig. 3. The heat transfer medium discharged from the pump 451 flows into the heat exchanger 450 arranged downstream of the pump 451.

The heat exchanger 450 exchanges heat between the heat transfer medium flowing through the temperature adjustment passage 831 and the heat transfer medium flowing through the heat exchanger passage 824. The heat transfer medium flowing through the temperature adjustment passage 831 has a lower temperature than the heat transfer medium flowing to the heat exchanger passage 824. Thus, the heat exchanger 450 performs a heat exchange that cools the heat transfer medium flowing through the heat exchanger passage 824 and heats the heat transfer medium flowing through the temperature adjustment passage 831. The heat transfer medium flowing through the temperature adjustment passage 831 flows through the heat exchanger 450 and then into the chiller 447.

The chiller 447 exchanges heat between the heat transfer medium flowing through the temperature adjustment passage 831 and the liquid refrigerant flowing through the chiller passage 812. the heat transfer medium flowing through the temperature adjustment passage 831 has a higher temperature than the liquid refrigerant flowing through the chiller passage 812. Thus, the chiller 447 performs a heat exchange that heats the liquid refrigerant flowing through the chiller passage 812 and cools the heat transfer medium flowing through the temperature adjustment passage 831. The temperature of the heat transfer medium flowing through the temperature adjustment passage 831 is adjusted by being heated by the heat exchanger 450 and cooled by the chiller 447. The heat transfer medium flowing through the temperature adjustment passage 831 flows through the chiller 447 and then into the five-way valve 412.

The five-way valve 412 is configured to distribute the heat transfer medium discharged from the pump 451 and flowing through the temperature adjustment passage 831 to the battery passage 832, the low temperature radiator passage 833, and the reservoir passage 834. When the heat transfer medium flows into the five-way valve 412 from the temperature adjustment passage 831, the thermal management system 800 is configured to variably control the proportion of the heat transfer medium distributed to the battery passage 832, the proportion of the heat transfer medium distributed to the low temperature radiator passage 833, and the proportion of the heat transfer medium distributed to the reservoir passage 834 through the five-way valve 412.

### Battery Passage 832 and Reservoir Passage 834

The battery 33 is arranged on the battery passage 832. The battery 33 is cooled or heated by exchanging heat with the heat transfer medium flowing through the battery passage 832. The heat transfer medium that has passed through the battery 33 is stored in the reservoir tank 452. The reservoir tank 452 is arranged on the reservoir passage 834. The reservoir tank 452 stores the heat transfer medium.

### Low Temperature Radiator Passage 833

The radiator 700, a pump 453, the power controller 310, and the oil cooler 391 are arranged on the low temperature radiator passage 833.

The radiator 700 exchanges heat between the heat transfer medium flowing through the low temperature radiator passage 833 and the air outside the electric vehicle 30 to cool the heat transfer medium flowing through the low temperature radiator passage 833.

When the heat transfer medium flowing through the low temperature radiator passage 833 needs to be heated, the thermal management system 800 controls the four-way valve 411 to adjust the flow rate of the heat transfer medium flowing in the high temperature radiator passage 823. When the heat transfer medium flows in the high temperature radiator passage 823, the radiator 700 exchanges heat between the heat transfer medium flowing through the low temperature radiator passage 833 and the heat transfer medium flowing through the high temperature radiator passage 823. This heats the heat transfer medium flowing through the low temperature radiator passage 833.

The heat transfer medium flowing through the low temperature radiator passage 833 flows through the radiator 700 and then into the pump 453. The pump 453 discharges the heat transfer medium flowing through the low temperature radiator passage 833 toward the power controller 310. Thus, the heat transfer medium flowing through the low temperature radiator passage 833 moves in directions indicated by arrow shown in Fig. 3. The power controller 310 is arranged on the low temperature radiator passage 833 downstream of the pump 453. The power controller 310 is heated or cooled by exchanging heat with the heat transfer medium flowing through the low temperature radiator passage 833.

The oil cooler 391 is arranged on the low temperature radiator passage 833 downstream of the power controller 310. The oil cooler 391 is connected to an oil circulation passage 840. The oil cooler 391 exchanges heat between the heat transfer medium flowing through the low temperature radiator passage 833 and oil flowing through the oil circulation passage 840 to heat or cool the oil flowing through the oil circulation passage 840. The oil circulation passage 840 is arranged to extend through the integrated electromechanical unit 300. The oil circulation passage 840 includes an oil pump 390. The oil pump 390 discharges the oil that has passed through the integrated electromechanical unit 300 toward the oil cooler 391. When the oil pump 390 is activated, the oil in the oil circulation passage 840 moves in directions indicated by arrows shown in Fig. 3. When the oil cooled by the oil cooler 391 circulates through the oil circulation passage 840, the motor 350 of the integrated electromechanical unit 300 is cooled. In addition, the oil circulation passage 840 may be arranged so as to cool the planetary gear reduction mechanism 360 and the differential device 370. The low temperature radiator passage 833 may be arranged so as to cool devices other than the power controller 310 and the oil cooler 391.

The heat transfer medium flowing through the low temperature radiator passage 833 flows through the oil cooler 391 and then into the five-way valve 412. That is, the five-way valve 412 is configured such that the portions of the heat transfer medium flowing through the low temperature radiator passage 833 converge. When the heat transfer medium flows into the five-way valve 412 from the low temperature radiator passage 833, the thermal management system 800 variably controls, through the five-way valve 412, the proportion of the heat transfer medium distributed to the battery passage 832, the proportion of the heat transfer medium distributed to the reservoir passage 834, and the proportion of the heat transfer medium flowing again into the low temperature radiator passage 833.

In the thermal integration unit 400, multiple components are connected and integrated with each other by a pipe in which the heat transfer medium flows. As shown in Fig. 3, the four-way valve 411 is connected to the high voltage heater 430 by the high voltage heater passage 821 of the second pipe 820. In other words, the thermal manager 410 including the four-way valve 411 is connected to the high voltage heater 430 by the second pipe 820. The water cooling condenser 441 is connected to the high voltage heater 430 by the high voltage heater passage 821 of the second pipe 820. In other words, the refrigerant module 420 including the water cooling condenser 441 is connected to the high voltage heater 430 by the high voltage heater passage 821. The five-way valve 412 is connected to the chiller 447 by the temperature adjustment passage 831 of the third pipe 830. In other words, the thermal manager 410 including the five-way valve 412 is connected to the refrigerant module 420, which includes the chiller 447, by the third pipe 830.

### Operation of the Present Embodiment

As shown in Fig. 1, in the electric vehicle 30, the thermal integration unit 400 is arranged between the motor 350 and the trunk box 600. As shown in Fig. 4, the second pipe 820 and the third pipe 830, in which the heat transfer medium flows, are connected to the thermal integration unit 400. The thermal integration unit 400, in which the heat transfer medium circulates, efficiently absorbs heat. Heat emitted from the motor 350 is partially absorbed by the thermal integration unit 400 without being transferred to the trunk box 600.

### Advantages of the Present Embodiment

(1) The electric vehicle 30 limits transferring of heat generated in the motor 350, which is a heat source, to a cargo stored in the trunk box 600.
(2) In the electric vehicle 30, the motor 350 and the trunk box 600 are separated from each other in the vehicle longitudinal direction. This limits transferring of heat generated in the motor 350 to a cargo stored in the trunk box 600. In the integrated electromechanical unit 300, one of the drive shafts 380 extends through the output shaft 353. The motor 350, the planetary gear reduction mechanism 360, and the differential device 370 are arranged so as to overlap with each other as viewed from a side of the vehicle. The integrated electromechanical unit 300 having this structure is reduced in size in the vehicle longitudinal direction and a vehicle height-wise direction as compared to an integrated electromechanical unit in which a drive shaft of a wheel does not extend through an output shaft of a motor. Thus, in the electric vehicle 30, the motor 350 and the trunk box 600 may be further separated from each other in the vehicle longitudinal direction.
(3) The thermal integration unit 400 includes the thermal manager 410. The thermal manager 410 includes the four-way valve 411, which distributes the heat transfer medium flowing in the second pipe 820 to multiple passages, and the five-way valve 412, which distributes the heat transfer medium flowing in the third pipe 830 to multiple passages. The thermal integration unit 400 further includes the high voltage heater 430 heating the heat transfer medium using power supplied from the battery 33. The thermal manager 410 is arranged forward of the high voltage heater 430. That is, in the electric vehicle 30, the thermal manager 410 through which the heat transfer medium flows is arranged between the trunk box 600 and the high voltage heater 430. Among components of the thermal integration unit 400, the thermal integration unit 410, in which the heat transfer medium circulates, efficiently absorbs heat. Heat generated by the high voltage heater 430, which is a heat source, is partially absorbed by the thermal manager 410 without being transferred to the trunk box 600. Thus, the electric vehicle 30 limits transferring of heat generated in the high voltage heater 430, which is a heat source, to a cargo stored in the trunk box 600.
(4) The third pipe 830, which is arranged frontward in the thermal manager 410, is located closer to the trunk box 600 than the second pipe 820, which is arranged rearward in the thermal manager 410. The temperature of the heat transfer medium flowing through the third pipe 830 is lower than that of the second pipe 820. Thus, the electric vehicle 30 limits transferring of heat from the heat transfer medium to a cargo stored in the trunk box 600.
(5) In the thermal integration unit 400, the thermal manager 410 is arranged forward of the high voltage heater 430. The refrigerant module 420 and the motor-driven compressor 440 are arranged between the thermal manager 410 and the high voltage heater 430. With this structure, heat emitted from the high voltage heater 430, which is a heat source, is partially absorbed by the thermal manager 410, the refrigerant module 420, and the motor-driven compressor 440 without being transferred to the trunk box 600. Thus, the electric vehicle 30 limits transferring of heat from the high voltage heater 430, which is a heat source, to a cargo stored in the trunk box 600.

### Modified Examples

The present embodiment may be modified as described below. The present embodiment and the following modified examples can be combined as long as the combined modified examples remain technically consistent with each other.

In the electric vehicle 30, as long as the thermal integration unit 400 is arranged between the motor 350 and the trunk box 600, the drive shaft 380 of the front wheel does not necessarily have to extend through the output shaft 353 of the motor 350. In an example, in the integrated electromechanical unit 300, the output shaft 353 of the motor 350 and the drive shaft 380 of the front wheel do not have to overlap with each other as viewed from a side of the vehicle.

The thermal integration unit 400 of the electric vehicle 30 is not limited to having the structure described above. In an example, the high voltage heater 430 may be arranged forward of the thermal manager 410. This structure also limits transferring of heat generated in the motor 350 to a cargo stored in the trunk box 600 as long as the thermal integration unit 400 is arranged between the motor 350, which is a heat source, and the trunk box 600.

The pipes arranged in the thermal manager 410 are not limited to those having the structure described above. For example, the second pipe 820 may be arranged forward of the third pipe 830. This structure also limits transferring of heat generated in the motor 350 to a cargo stored in the trunk box 600 as long as the thermal integration unit 400 is arranged between the motor 350, which is a heat source, and the trunk box 600 as viewed from a side of the vehicle.

The thermal integration unit 400 of the electric vehicle 30 is not limited to having the structure described above. In an example, the refrigerant module 420 and the motor-driven compressor 440 may be arranged rearward of the high voltage heater 430. This structure also limits transferring of heat generated in the motor 350 to a cargo stored in the trunk box 600 as long as the thermal integration unit 400 is arranged between the motor 350, which is a heat source, and the trunk box 600.

## Claims

1. An electric vehicle (30), comprising:
a battery (33);
a front wheel;
a motor (350) configured to drive the front wheel using power stored in the battery (33);
a power controller (310) configured to supply power from the battery (33) to the motor (350);
an integrated electromechanical unit (300) in which the motor (350) and the power controller (310) are integrated;
a thermal integration unit (400) in which multiple components are connected and integrated with each other by a pipe (810, 820, 830, 840) through which a heat transfer medium flows; and
a trunk box (600) configured to store a cargo, wherein
the battery (33) is arranged under a floor (44) of a passenger compartment (46),
the motor (350), the power controller (310), the thermal integration unit (400), and the trunk box (600) are arranged forward of the passenger compartment (46),
the trunk box (600), the thermal integration unit (400), and the motor (350) are arranged sequentially from front of the vehicle (30), and
the thermal integration unit (400) is arranged between the trunk box (600) and the motor (350).

2. The electric vehicle (30) according to claim 1, wherein
the integrated electromechanical unit (300) includes a power transmission mechanism configured to transmit rotational driving force from the motor (350) to the front wheel,
the power transmission mechanism includes
a planetary gear reduction mechanism (360) configured to decelerate rotation transmitted from the motor (350) and output the rotation, and
a differential device (370) configured to transmit rotation from the planetary gear reduction mechanism (360) to the front wheel via a right drive shaft (380) and a left drive shaft (380),
the planetary gear reduction mechanism (360) includes
a sun gear (361) provided on an output shaft (353) of the motor (350),
multiple pinion gears (362) meshing with the sun gear (361) and configured to orbit around a rotation axis (L) of the sun gear (361),
a ring gear (363) meshing with the pinion gears (362), and
a carrier (364) supporting the pinion gears (362) to allow the pinion gears (362) to rotate, the carrier (364) being configured to rotate coaxially with the sun gear (361) in accordance with orbital movement of the pinion gears (362),
the differential device (370) includes
a differential case (371) integrated with the carrier (364),
a differential pinion shaft (372) provided in the differential case (371) and orthogonal to the rotation axis (L),
multiple differential pinion gears (373) through which the differential pinion shaft (372) extends, and
multiple differential side gears (374) meshing with the differential pinion gears (373) and connected to the drive shafts (380),
the drive shafts (380) are configured to rotate when rotation of the differential case (371) associated with rotation of the carrier (364) is transmitted to the drive shafts (380) via the differential pinion shaft (372), the differential pinion gears (373), and the differential side gear (374),
the motor (350), the carrier (364), the differential case (371), and the drive shafts (380) are configured to rotate about the rotation axis (L),
one of the left drive shaft (380) and the right drive shaft (380) extends through the output shaft (353), and
the motor (350), the planetary gear speed reduction mechanism (360), and the differential device (370) are arranged so as to overlap with each other as viewed from a side of the vehicle (30).

3. The electric vehicle (30) according to claim 1 or 2, wherein
the thermal integration unit (400) includes
a thermal manager (410) including a valve (411, 412) configured to distribute the heat transfer medium flowing in the pipe (820, 830) to multiple passages (821, 822, 823, 824, 831, 832, 833, 834), and
a high voltage heater (430) configured to heat the heat transfer medium using power supplied from the battery (33), and
the thermal manager (410) is arranged forward of the high voltage heater (430).

4. The electric vehicle (30) according to claim 3, wherein
the pipe (810, 820, 830, 840) includes a front pipe (830) and a rear pipe (820), rearward of the front pipe (830), arranged in the thermal manager (410), and
a heat transfer medium flowing in the front pipe (830) is lower in temperature than a heat transfer medium flowing in the rear pipe (820).

5. The electric vehicle (30) according to claim 3 or 4, further comprising:
heat ventilating air conditioning (HVAC) (500) including a cooling circuit (444) and a heating circuit (431) and configured to send air, the temperature of which is adjusted, to the passenger compartment (46), wherein
the HVAC (500) is arranged to extend forward from the passenger compartment (46) through a dashboard panel (45),
the thermal integration unit (400) is arranged forward of the HVAC (500), upward from the motor (350), and rearward of the trunk box (600),
the thermal integration unit (400) includes
a refrigerant module (420) including an expansion valve (443, 446) configured to control a flow rate of a refrigerant flowing in a refrigerant pipe (810), and
a motor-driven compressor (440) configured to compress the refrigerant using power supplied from the battery (33), and
the refrigerant module (420) and the motor-driven compressor (440) are arranged between the thermal manager (410) and the high voltage heater (430).
